(19) Europäisches Patentamt
European Patent Office
Office européen des brevets

(11) Veröffentlichungsnummer: **0 112 801**
**B1**

(12) # EUROPÄISCHE PATENTSCHRIFT

(45) Veröffentlichungstag der Patentschrift: **22.07.87**

(51) Int. Cl.⁴: **C 07 F 9/40,** D 06 L 3/02, C 11 D 3/39

(21) Anmeldenummer: **83810571.6**

(22) Anmeldetag: **05.12.83**

(54) **Magnesiumkomplexe oligomerer Phosphonsäureester, Verfahren zu ihrer Herstellung und ihre Verwendung als Stabilisatoren in alkalischen peroxidhaltigen Bleichflotten.**

(30) Priorität: **10.12.82 CH 7216/82**
**25.01.83 CH 400/83**

(43) Veröffentlichungstag der Anmeldung: **04.07.84 Patentblatt 84/27**

(45) Bekanntmachung des Hinweises auf die Patenterteilung: **22.07.87 Patentblatt 87/30**

(84) Benannte Vertragsstaaten: **AT BE CH DE FR GB IT LI NL**

(56) Entgegenhaltungen:
**EP-A-0 029 076**
**EP-A-0 082 823**
**EP-A-0 100 300**
**FR-A-2 396 114**

(73) Patentinhaber: **CIBA- GEIGY AG, Klybeckstrasse 141, CH- 4002 Basel (CH)**

(72) Erfinder: **Guth, Christian, In den Klostermatten 26, CH- 4052 Basel (CH)**
Erfinder: **Schäfer, Paul, Dr., Kornfeldstrasse 11, CH- 4125 Riehen (CH)**

**EP 0 112 801 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Oligomere Phosphonsäureester der Formel

(1) 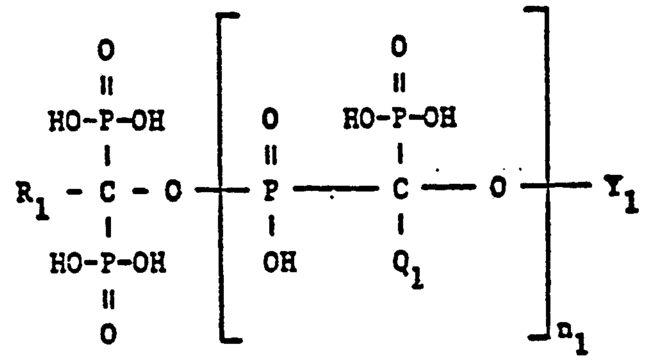 ,

worin $Y_1$ Wasserstoff oder $-COT_1$ ist, $R_1$, $Q_1$ und $T_1$ jeweils Alkyl mit 1 bis 4 Kohlenstoffatomen sind und $n_1$ 1 bis 16 ist, sind aus der europäischen Patentanmeldung 29076 bekannt. Sie werden verwendet, um in wässrigen Systemen die Bildung wasserunlöslicher Salze zu verhindern.

Es wurde nun gefunden, dass sich Magnesiumkomplexe dieser Oligomeren gut zur Stabilisierung von alkalischen peroxidhaltigen Bleichflotten zum Bleichen cellulosehaltiger Fasermaterialien eignen.

Gegenstand der vorliegenden Erfindung sind daher Magnesiumkomplexe, die als Liganden oligomere Phosphonsäureester der obigen Formel (1) enthalten.

Weitere Gegenstände der vorliegenden Erfindung sind ein Verfahren zur Herstellung der Magnesiumkomplexe, die diese Komplexe enthaltenden Bleichflotten, die Verwendung dieser Flotten zum Bleichen cellulosehaltiger Fasermaterialien und ein Verfahren zum Bleichen cellulosehaltiger Fasermaterialien.

Als Alkylreste für $R_1$, $Q_1$ und $T_1$ in den Verbindungen der Formel (1) kommen Isobutyl, vorzugsweise Isopropyl, vor allem n-Butyl und n-Propyl und insbesondere Aethyl und Methyl in Betracht, wobei Methyl besonders bevorzugt ist.

Ist $Y_1$ $-CO-T_1$, haben $T_1$ und $R_1$ vorzugsweise die gleichen Bedeutungen. Wasserstoff als Bedeutung von $Y_1$ steht indessen im Vordergrund des Interesses. Als Grenzwerte für $n_1$ sind 1 bis 16 und insbesondere 1 bis 12 bevorzugt, wobei im Gemisch Oligomere mit mittleren Werten für n von 5 bis 9, vorzugsweise 5 oder 6 den Hauptbestandteil bilden. Oligomere mit $n = 1$ und Oligomere mit $n = 12$ bis 16, vor allem 12, sind aber stets in kleineren Mengen im Gemisch vorhanden.

Vorzugsweise werden Oligomere der Formel

(2) 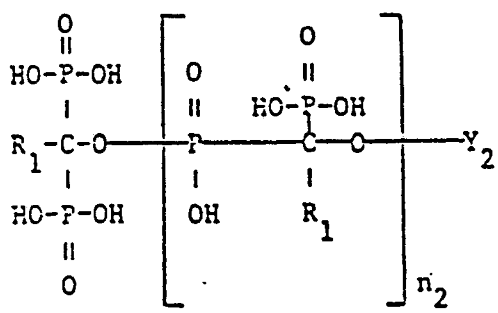 ,

worin $Y_2$ Wasserstoff oder $-CO-T_1$, $n_2$ 1 bis 14 ist und $T_1$ die angegebene Bedeutung hat und insbesondere der Formel

(3) 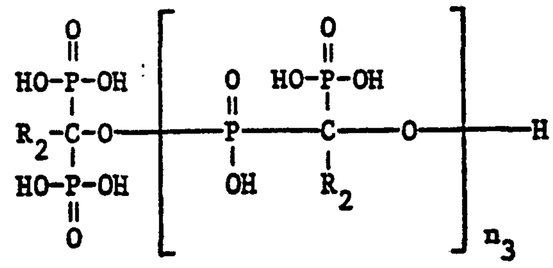 ,

worin $R_2$ Methyl oder Äthyl und $n_3$ 1 bis 12 ist, verwendet.

Die Herstellung der erfindungsgemässen Magnesiumkomplexe erfolgt durch Umsetzung einer vorzugsweise wässrigen Lösung der genannten Oligomeren mit einem wasserlöslichen Magnesiumsalz wie z. B. Magnesiumacetat, -sulfat oder -oxid oder vorzugsweise Magnesiumchlorid. Vorzugsweise tropft man unter Rühren eine wässrige Lösung besagter Oligomeren in eine wässrige Lösung eines der genannten Magnesiumsalze. Die so erhaltene Lösung weist einen pH-Wert von 0 bis 1 auf. Die verwendeten Lösungen der Oligomeren enthalten in der Regel 30 bis 55,vorzugsweise 30 bis 40 Gew.% Phosphonsäureester. Magnesiumchlorid wird gewöhnlich in Form seines Hexahydrats ($MgCl_2.6H_2O$) eingesetzt. Es ist jedoch auch möglich, Magnesiumchlorid mit niedrigerem Wassergehalt sowie wasserfreies Magnesiumchlorid zu verwenden. Vorzugsweise beträgt das Molgewichtsverhältnis von Phosphonsäureester zu Magnesium ($Mg^{2+}$) 1:0,1 bis 1:4,5. Besonders geeignet ist ein Molverhältnis von 1:0,5 bis 1:3,0. (Als Molgewicht für die Phosphonsäureester wird willkürlich 394 gewählt, wobei dann in den Verbindungen der Formel (1) $n_1$ 1 ist, $R_1$ und $Q_1$ Methyl sind, und $Y_1$ Wasserstoff ist). Die bei der Herstellung der Magnesiumkomplexe entstehende Reaktionswärme kann durch Kühlung abgeführt werden.

Die erfindungsgemässen Bleichflotten (wässrige Lösungen) zum Bleichen cellulosischer Materialien enthalten im allgemeinen

(a) ein Alkalimetallhydroxid,
(b) Wasserstoffperoxid,
(c) einen Magnesiumkomplex der Oligomeren der Formel (1),
(d) eine Polyhydroxiverbindung und gegebenenfalls als weitere Zusätze
(e) ein Peroxidisulfat,
(f) ein Netzmittel,
(g) ein Entschäumungs- und/oder Entlüftungsmittel,
(h) ein wasserlösliches Alkalimetallsalz eines Silikates und/oder
(i) einen optischen Aufheller.

Als Komponenten (a) und (b) werden Kaliumhydroxid und vor allem das preisgünstigere Natriumhydroxid, und Wasserstoffperoxid vor allem in Form ihrer wässrigen, vorzugsweise konzentrierten (etwa 30 bis 50 Gewichtsprozent) Lösungen eingesetzt. Die Komponente (a) kann aber auch als Feststoff, z. B. Aetznatron, eingesetzt werden.

Die erfindungsgemässen Magnesiumkomplexe der oligomeren Phosphonsäureester, Komponente (c), unterdrücken sehr wirkungsvoll die Zersetzung des Wasserstoffperoxids beim Einbringen der Rohbaumwolle in die Bleichflotte. Dieser stabilisierende Effekt ist auch wirksam, wenn die Temperatur der Bleichflotte erhöht wird. Die Magnesiumkomplexe eignen sich auch für eine andere Variante dieses als Heissbleiche (im Gegensatz zur Kaltbleiche) bezeichneten Verfahrens, in dem das mit der Bleichflotte imprägnierte Fasermaterial z. B. bei erhöhter Temperatur behandelt wird. Vorzugsweise setzt man bei der Heissbleiche Komplexe ein, die einen höheren Gehalt an Magnesium besitzen. Beispielsweise kommen Komplexe, die Oligomer und Magnesium im Molverhältnis 1:2 bis 1:4,5 enthalten, in Frage.

Die Polyhydroxiverbindungen (d) gewährleisten insbesondere auch bei pH-Werten über 11 eine grosse Stabilisierwirkung der erfindungsgemässen Bleichflotte. Als Polyhydroxiverbindungen kommen solche Verbindungen in Frage, die mindestens 2 Hydroxylgruppen enthalten. Vorzugsweise entsprechen diese Verbindungen der Formel

(4) 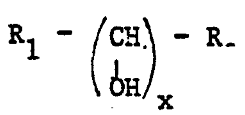

worin $R_1$ und $R_2$ unabhängig voneinander $-CH_2OH$, -CHO oder $-CO_2M$ bedeuten, M Wasserstoff oder ein Alkalimetall, vorzugsweise Natrium, und x 2 bis 5, vorzugsweise 2 bis 4 ist.

Weitere bevorzugte Verbindungen der Formel (4) sind die Hydroxycarbonsäuren der Formel

$$(5)\quad OHC-\left(\begin{matrix}CH\\ |\\ OH\end{matrix}\right)_x-CO_2M \quad \text{oder} \quad (6)\quad HO-CH_2-\left(\begin{matrix}CH\\ |\\ OH\end{matrix}\right)_x-CO_2M,$$

worin M und x die angegebenen Bedeutungen haben, oder ein Lacton dieser Hydroxycarbonsäuren, Gluconsäure und ihre Alkalimetallsalze, vorzugsweise Natriumsalze (Na-Gluconat) und auch das γ-Lacton der Gluconsäure, zeigen besonders gute Resultate. Vorzugsweise werden auf 1 Mol Phosphonsäureester 0,1 bis 20 Mol Polyhydroxyverbindung eingesetzt. Geeignete Bleichflotten enthalten somit 0,4 bis 10 g/l Polyhydroxyverbindung.

Bevorzugte Komponenten (e) sind Alkalimetallperoxidisulfate und insbesondere Natriumperoxidisulfat ($Na_2S_2O_8$), das vorzugsweise als Feststoff eingesetzt wird.

Als Netzmittel (f) kommen sowohl anionische Tenside, insbesondere aber auch deren Gemische mit nichtionischen Tensiden in Betracht. Bevorzugte anionische Tenside sind z. B. Alkansulfonate, Alkylarylsulfonate, Fettsäurekondensationsprodukte, Eiweißspaltprodukte oder deren Salze und vor allem Alkylsulfatsalze und Alkylbenzolsulfonsäuren mit 12 bis 22 Kohlenstoffatomen im Alkylrest. Bevorzugte nicht-ionische Tenside sind z. B. Addukte aus Alkylenoxiden, vor allem Propylen- und insbesondere Äthylenoxid und Alkylphenolen mit z. B. 4 bis 12 Kohlenstoffatomen im Alkylrest, vor allem Fettsäureamiden und insbesondere Fettalkoholen, wobei Addukte aus Äthylenoxid und Fettalkoholen besonders bevorzugt sind, und als Gemisch mit den Alkylsulfaten, Alkansulfonaten und den Alkylbenzolsulfonsäuren der angegebenen Art im Vordergrund des Interesses stehen. Als weitere Komponenten in diesen Gemischen eignen sich Silikontenside bzw. Silikonöle.

Als bevorzugte Komponente (g) kommen höhere Alkohole, z. B. Isooctylalkohol, jedoch vor allem Entschäumungs- und/oder Entlüftungsmittel auf Silikonbasis in Betracht.

Vorzugsweise werden die Komponenten (f) und (g) mit handelsüblichen wässrigen, etwa 10 bis 60, vorzugsweise 30 bis 40 gewichtsprozentigen Formulierungen von nicht schäumenden Tensidgemischen kombiniert.

Als bevorzugte Komponente (h) kommen z. B. wasserlösliche Alkalimetallsilikate, insbesondere Natron-Wasserglas mit einem Gehalt von 24 bis 28 % $SiO_2$, vor allem als wässrige, etwa 30 bis 40 gewichtsprozentige Lösungen in Betracht.

Die als Komponente (i) eingesetzten optischen Aufheller gehören im allgemeinen der Styryl- und Stilbenreihe an, wie z. B. Distyrylarylene, Diaminostilbene, Ditriazolylstilbene, Phenylbenzoxazolylstilbene, Stilbennaphthotriazole und Dibenzoxazolylstilbene. Bevorzugt sind optische Aufheller vom Typ der Distyrylbiphenyle oder der Bistriazinylaminostilbene, welche Sulfonsäuregruppen enthalten, z. B. sulfonierte Distyrylbiphenyl- und Bistriazinyl-Derivate, insbesondere die als Alkalimetallsalze, vor allem als Kalium- oder vorzugsweise als Natriumsalze vorliegenden Bis(Phenylamino-dialkylamino-s-triazinyl)stilben-disulfonsäuren und Bis(Phenylamino-morpholino-s-triazinyl)stilben-disulfonsäuren. Diese werden vorzugsweise als handelsübliche wässrige, etwa 20 bis 30 gewichtsprozentige Flüssigformulierungen eingesetzt.

Vorzugsweise enthalten die erfindungsgemässen Bleichflotten

0,02 bis 10 Gewichtsprozent (0,2 bis 100 g/l) der Komponente (a),
0,01 bis 2,5 Gewichtsprozent (1,0 bis 70 g/l) der Komponente (b),
0,02 bis 4 Gewichtsprozent (0,3 bis 25 g/l) der Komponente (c),
0,04 bis 1 Gewichtsprozent (0,4 bis 10 g/l) der Komponente (d),
und gegebenenfalls
0 bis 5 Gewichtsprozent (0 bis 50 g/l) der Komponente (e),
0 bis 2,5 Gewichtsprozent (0 bis 50 g/l) der Komponente (f),
0 bis 0,05 Gewichtsprozent (0 bis 10 g/l) der Komponente (g),
0 bis 1,5 Gewichtsprozent (0 bis 42,8 g/l) der Komponente (h) und/oder
0 bis 0,8 Gewichtsprozent (0 bis 32 g/l) der Komponente (i),

wobei sich die Prozentangaben stets auf den Gehalt an Aktivsubstanz der Komponenten (a) bis (i) beziehen.

Besonders geeignete Bleichflotten enthalten die Komponente (c) zu 0,05 bis 0,5, insbesondere 0,05 bis 0,3 Gewichtsprozent (0,5 bis 5, insbesondere 0,5 bis 3 g/l) und die Komponente (d) zu 0,04 bis 0,5, insbesondere 0,04 bis 0,35 Gewichtsprozent (0,4 bis 5, insbesondere 0,4 bis 3,5 g/l).

Die Applikationsverfahren zum alkalischen, oxydativen Bleichen von Cellulose enthaltenden Fasermaterialien unter Verwendung der erfindungsgemässen Bleichflotten werden nach an sich bekannten Methoden durchgeführt.

Man unterscheidet hierbei zwischen einer Behandlung in langen Flotten oder den sogenannten Klotz- bzw. Imprägnierverfahren.

In langen Flotten wird das Material einer Behandlung in einem Flottenverhältnis von etwa 1:3 z. B. in einem Jigger, bis etwa 1:40 z. B. in einer Haspelkufe während 1 bis 3 Stunden bei erhöhter Temperatur unterworfen, wobei die Behandlungstemperatur 40 bis 140° C beträgt, vorzugsweise 60 bis 100° C unter Normalbedingungen, d.h. unter atmosphärischem Druck, oder über 100° C, vorzugsweise 105 bis 140° C unter sogenannten HT- (d.h. Hochtemperatur) Bedingungen.

Bei den Klotzverfahren wird das zu behandelnde Material durch Eintauchen in die Klotzflotte und anschliessendem Abquetschen imprägniert, wobei die Klotzflotte in der Regel eine Temperatur von 20 bis 95° C

aufweist. Die durch die Imprägnierung aufgebrachten Chemikalien wirken sodann auf das Textilmaterial ein, wobei Einwirkungszeit, gegebenenfalls erhöhte Temperatur und Chemikalien-Konzentration in direktem Zusammenhang stehen und die gewählten Bedingungen von der Beschaffenheit des Fasermaterials und vor allem der zur Verfügung stehenden Anlage abhängen. So wird das Fasermaterial je nach verwendeter Apparatur als Warenbahn oder in Strangform z. B. bei 100 bis 140°C während 1 bis 10 Minuten in Dämpfern, bei 95 bis 100°C während 8 bis 30 Minuten in Breitstiefeln, bei 90 bis 100°C während 45 Minuten bis 2 Stunden in J-Boxen oder Conveyern, bei 80 bis 90°C während 2 bis 4 Stunden im Pad-Roll-Verfahren oder bei 50 bis 80°C während etwa 3 bis 6 Stunden oder bei 20 bis 30°C während 10 bis 24 Stunden im Pad-Batch-Verfahren behandelt, wobei im allgemeinen die Behandlungsdauer umso kürzer wird, je höher die Temperatur ist.

Anschliessend werden die Fasermaterialien in der Regel zuerst mit kochend heissem Wasser, dann mit warmem Wasser und zuletzt mit kaltem Wasser gründlich gespült, gegebenenfalls mit z. B. Essigsäure neutralisiert und schliesslich entwässert und getrocknet.

Das cellulosehaltige Material, das erfindungsgemäss gebleicht wird, kann in den verschiedensten Verarbeitungsstufen vorliegen, z. B. als loses Material, Garn, Gewebe oder Gewirke. Hierbei handelt es sich also in der Regel stets um textile Fasermaterialien, die aus reinen textilen Cellulosefasern oder aus Gemischen aus textilen Cellulosefasern mit textilen Synthesefasern hergestellt werden.

Als cellulosische Fasern kommen z. B. solche aus regenerierter Cellulose, wie z. B. Zellwolle und Viskose, solche aus nativer Cellulose, wie z. B. Hanf, Leinen und Jute und vor allem Baumwolle und als synthetische Fasern solche aus Polyacrylnitril und vor allem aus Polyester und Polyamid in Betracht.

Gewebe aus Baumwolle oder regenerierter Cellulose oder Mischgewebe aus Baumwolle und Polyester und aus Baumwolle und Polyamid eignen sich besonders gut dazu, erfindungsgemäss gebleicht zu werden, wobei Baumwollgewebe und -gewirke im Vordergrund des Interesses stehen. Mit z. B. Tensiden vorgewaschene Materialien kommen auch in Betracht. Es ist auch möglich, geschlichtete Baumwollfasern zu bleichen, wobei das Bleichen nach oder vor dem Entschlichten erfolgt.

Die erfindungsgemäss gebleichten Fasermaterialien zeichnen sich durch ihre Schalenfreiheit, ihre gute Wiederbenetzbarkeit, ihren niedrigen Aschegehalt und vor allem ihren hohen Weissgrad aus. Die Cellulose, bzw. der Celluloseanteil des gebleichten Materials weist zudem keine Schädigungen bzw. keinen wesentlichen Abbau des Cellulosepolymerisationsgrades (DP-Grades, DP = Durchschnittspolymerisation) auf.

Durch die Verwendung der erfindungsgemässen Kombination von Magnesiumkomplexen und Polyhydroxyverbindungen wird eine besonders hohe Stabilisierungswirkung insbesondere bei hohen pH-Werten(>11) erzielt. Der ursprünglich vorhandene Aktivsauerstoffgehalt der Bleichflotten bleibt über längere Zeit erhalten oder nimmt nur unwesentlich ab. Trotzdem ist der Bleicheffekt ausgezeichnet. Die Flotten sind stabil und können über längere Zeit verwendet werden. Zudem kann man durch die Verwendung der Magnesiumkomplexe auf Silikate (Wasserglas) z.T. ganz verzichten, so dass kaum oder keine Verkrustungen der Bleichapparaturen und Inkrustationen auf dem gebleichten Fasermaterial auftreten.

Es wurde ferner festgestellt, dass auch mit steigender Konzentration an Alkalimetallhydroxid in der Bleichflotte eine gleichfalls steigende Konzentration an Aktivsauerstoff stabilisiert werden kann.

Die genannten vorteilhaften Eigenschaften, die die erfindungsgemässen Kombinationen von Magnesiumkomplexen und Polyhydroxyverbindungen in Bleichflotten zeigen, können sich z. B. in einer Vereinfachung bzw. Intensivierung der Bleichvorgänge äussern. Bei der Kaltlagerbleiche z. B. verbleibt ein höherer Gehalt an Aktivsauerstoff auf der behandelten Ware, dessen Bleichkraft dann in dem sich der Kaltlagerbleiche anschliessenden Waschvorgang mit heissem Wasser auch noch ausgenutzt werden kann. Dieser Waschvorgang kann also als (silikatfreie) Heissbleiche angesehen werden, und der gesamte Vorgang einschliesslich Kaltlagerbleiche stellt somit eine Zweistufenbleiche dar. So behandelte Materialien zeichnen sich durch einen sehr hohen Weissgrad aus.

In den nachfolgenden Beispielen beziehen sich Prozente und Teile stets auf das Gewicht, sofern nichts anderes angegeben ist.

**Beispiel 1:**

560,4 g einer 35 %igen wässrigen Lösung des Oligomers der Formel

(6) 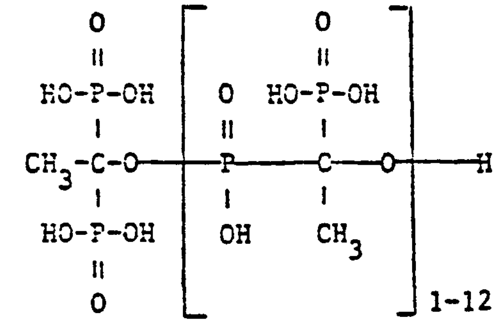

werden unter Kühlung mit einer 50 %igen wässrigen Lösung von Kaliumhydroxid auf einen pH-Wert von 5 eingestellt. Anschliessend gibt man 202,1 g Magnesiumchlorid-Hexahydrat hinzu. Man erhält so eine wässrige Lösung eines Magnesiumkomplexes, worin das Molverhältnis von Oligomer der Formel (6) zu Magnesium ($Mg^{2+}$) 1:2 beträgt.

Man stellt eine Bleichflotte her, die pro Liter wässriger Lösung 10 ml der oben hergestellten Komplexlösung, 20 ml 30 %ige Natronlauge, 40 ml 35 %iges Wasserstoffperoxid, 5 g einer 25 %igen wässrigen Tensidlösung aus 56 % einer ($C_{12}$-$C_{22}$)-Alkylbenzolsulfonsäure, 25 % Äthylenoxidaddukte von technischen ($C_{12}$-$C_{22}$)-Fettalkoholgemischen und 19 % Natrium-($C_{12}$-$C_{22}$)-Alkylsulfat, sowie ein weiteres Gramm Magnesiumchlorid-Hexahydrat enthält. Das Verhältnis von Oligomer zu Magnesium in dem nun vorliegenden Komplex beträgt 1:3.

Diese Flotte wird auf 90°C erhitzt. Man bringt 10 g Rohbaumwollgewebe ein (Flottenverhältnis 1:50) und bleicht während 15 Minuten.

Man erhält so ein hochweissgebleichtes, schalenfreies Gewebe.

Nach dieser Behandlung beträgt der Restperoxidgehalt noch 80 %. Diese Bleichflotte kann für weitere Bleichprozesse verwendet werden; sie wird normalerweise unbrauchbar, wenn die Konzentration an Wasserstoffperoxid unter etwa 20 % gesunken ist. Verwendet man jedoch anstelle des Magnesiumkomplexes 2,1 g/l Oligomere der Formel (6), so zersetzt sich das in der Flotte enthaltene Wasserstoffperoxid spontan und weitgehend. Der Restperoxidgehalt nach dem Bleichvorgang beträgt nur noch 9 %.

Eine gute Bleichwirkung wird auch erzielt, wenn man mit der beschriebenen Bleichflotte bei nur 60°C bleicht. Der Restperoxidgehalt der Flotte liegt dann noch über 80 %.

Sowohl einen guten Bleicheffekt als auch einen hohen Restperoxidgehalt kann man auch verzeichnen, wenn die genannte Bleichflotte nur 10 ml/l 30 %ige Natronlauge und 20 ml/l 35 %iges Wasserstoffperoxid enthält.

**Beispiel 2:**

Rohes Baumwollgewebe wird mit einer wässrigen Bleichflotte imprägniert, die pro Liter 50 g Natriumhydroxid, 60 ml 35 %iges Wasserstoffperoxid, 5 g Natriumperoxidisulfat, 5 g der in Beispiel 1 verwendeten Tensidlösung und 15 ml einer wässrigen Lösung aus 112,5 Teilen der 35 %igen wässrigen Lösung der Oligomeren der Formel (6), 40,1 Teilen einer 50 %igen wässrigen Lösung von Kaliumhydroxid und 10,1 Teilen von Magnesiumchlorid-Hexahydrat enthält, und durch Abquetschen auf eine Flottenaufnahme von 100 % gebracht. Das imprägnierte Gewebe wird aufgerollt und, in einer Polyäthylenfolie verpackt, 24 Stunden bei Raumtemperatur in nassem Zustand gelagert. Danach wird das Gewebe mit heissem (90-98°C), dann mit kaltem Wasser (5-25°C) gespült und anschliessend getrocknet.

Der Weissgrad des Rohgewebes erhöht sich so von -62 auf 60 (CIBA-GEIGY Weissmaßstab).

Der Peroxidgehalt der verwendeten Imprägnierflotte beträgt nach 24 Stunden noch 98 %.

**Beispiel 3:**

Rohes Baumwollgewebe wird mit einer wässrigen Bleichflotte imprägniert, die pro Liter 60 g Natriumhydroxid, 60 ml 35 %iges Wasserstoffperoxid, 4 g Natriumperoxidisulfat, 5 g der im Beispiel 1 verwendeten Tensidlösung sowie 15 ml einer wässrigen Lösung enthält, die aus 100 Teilen der 35 %igen wässrigen Lösung der Oligomeren der Formel (6), 62 Teilen Magnesiumchlorid-Hexahydrat, 158 Teilen Natriumgluconat und 680 Teilen Wasser besteht, und durch Abquetschen auf eine Flottenaufnahme von 100 % gebracht. Das imprägnierte Gewebe wird aufgerollt und, in einer Polyäthylenfolie verpackt, 24 Stunden bei Raumtemperatur in nassem Zustand gelagert. Danach wird das Gewebe zuerst mit heissem (90-98°C), dann mit kaltem Wasser (5-25°C) gespült und anschliessend getrocknet.

Der Weissgrad des behandelten Rohgewebes erhöht sich von -62 auf 45 (CIBA-GEIGY Weissmaßstab). Man erhält so ein hochweissgebleichtes, schalenfreies Gewebe.

Der Peroxidgehalt der verwendeten Imprägnierflotte beträgt nach 24 Stunden noch 98 %. Auf dem imprägnierten Gewebe kann nach 24stündiger Lagerung bei Raumtemperatur noch ein Peroxidgehalt von 28 % (100 % zu Beginn der Lagerung) festgestellt werden. Dies lässt auf einen ungestörten Bleichverlauf schliessen.

Gute Resultate erhält man auch, wenn anstelle des Natriumgluconates, Glucose, Gluconsäure oder deren γ-Lacton eingesetzt wird.

**Beispiel 4:**

Es wird eine Bleichflotte (a) hergestellt, die pro Liter 4 g Natriumhydroxid, 20 ml 35 %iges Wasserstoffperoxid, 6 g 35 %ige Natriumsilikatlösung, 1 g einer wässrigen Lösung enthaltend 31,9 % Natriumpentadekansulfonsäure und 10,4 % eines Adduktes aus einem $C_{12}$-Olefinalkohol mit 4 Mol Äthylenoxid, und 6 g einer wässrigen Zusammensetzung enthaltend 20 % einer 35 %igen wässrigen Lösung der Verbindungen der Formel (6), 14,5 % Magnesiumchlorid-Hexahydrat und 15,5 % Glukose, enthält.

Eine zweite Bleichflotte (b) wird hergestellt, die jedoch anstelle der 6 g/l wässriger Zusammensetzung nur 0,2 g/l Magnesiumchlorid-Hexahydrat enthält.

Je 100 ml der Flotten (a) und (b) werden auf 90°C erhitzt. In jeder der Flotten werden nacheinander je 5 Stücke Rohbaumwollgewebe (5 g) behandelt. Die Eintauchzeit beträgt jeweils 15 Minuten. Nach dem Bleichen des 5. Baumwollgewebes wird dessen Weissgrad (CIBA-GEIGY Weissmaßstab) und der Restperoxidgehalt in den Flotten (a) und (b) (im Vergleich zum Peroxidgehalt der entsprechenden kalten Zubereitungen) bestimmt:

Bleichflotte (a) : Restperoxidgehalt 66 %, Weissgrad 38

Bleichflotte (b) : Restperoxidgehalt 21 %, Weissgrad 24

(Vergleich: Rohbaumwolle, Weissgrad -63)

Es zeigt sich also, dass in der erfindungsgemässen Bleichflotte (a) Peroxid überraschend gut stabilisiert wird. Ferner besitzt das erfindungsgemäss behandelte Baumwollgewebe einen hohen Weissgrad.

**Beispiel 5:**

Mischgewebe aus 33 Teilen Rohbaumwolle und 67 Teilen Polyester wird mit einer wässrigen Bleichflotte imprägniert, die pro Liter 30 g Natriumhydroxid, 50 ml 35 %iges Wasserstoffperoxid, 4 g Natriumperoxidisulfat, 5 g der in Beispiel 4 verwendeten Tensidlösung und 10 g einer wässrigen Zusammensetzung enthaltend 10 % einer 35 %igen wässrigen Lösung der Verbindungen der Formel (6), 5,4 % Magnesiumchlorid-Hexahydrat und 15,5 % Natriumgluconat, enthält und durch Abquetschen auf eine Flottenaufnahme von 100 % gebracht. Das so imprägnierte Mischgewebe wird luftdicht in eine Plastikfolie verpackt und 24 Stunden bei Raumtemperatur gelagert. Anschliessend wird das Gewebe jeweils 1 Minute mit kochendem, heissem und dann kaltem Wasser nachgewaschen, neutralisiert und getrocknet. Der Weissgrad für das gebleichte Gewebe ist von 5 auf 63 gestiegen (CIBA-GEIGY Weissmaßstab).

**Beispiel 6:**

Mischgewirke aus 47 Teilen Rohbaumwolle und 53 Teilen Polyamid 6,6 wird während 1 Stunde in einer auf 85°C erhitzten Bleichflotte (Flottenverhältnis 1:20) behandelt, die pro Liter 5 ml 35 %iges Wasserstoffperoxid, 0,15g Proventin 7 (Handelsmarke, Degussa), 1 g der in Beispiel 5 verwendeten Tensidlösung, 2 g der in Beispiel 5 verwendeten wässrigen Zusammensetzung und soviel Natronlauge enthält, dass der pH-Wert der Bleichflotte 10,5 beträgt. Das so behandelte Mischgewirke wird jeweils 1 Minute mit kochendem, heissem und kaltem Wasser nachgewaschen, neutralisiert und getrocknet. Der Weissgrad für das gebleichte Gewirke ist von -71 auf 37 gestiegen (CIBA-GEIGY Weissmaßstab).

**Beispiel 7:**

Es wird eine Bleichflotte hergestellt, die pro Liter 20 g Natronlauge, 50 ml 35 %iges Wasserstoffperoxid, 10 g der in Beispiel 6 verwendeten wässrigen Zusammensetzung und 5 g der in Beispiel 6 verwendeten Tensidlösung enthält. Der pH-Wert dieses Bleichbades beträgt 12,1.

Eine zweite Bleichflotte wird hergestellt, die die genannten Komponenten in fünffacher Konzentration enthält.

Beide Bleichflotten besitzen noch nach 24 Stunden Lagerung bei Zimmertemperatur den ursprünglichen Gehalt an Wasserstoffperoxid.

**Patentansprüche**

für die Vertragsstaaten: BE, CH, LI, DE, FR, GB, IT, NL

1. Magnesiumkomplexe, dadurch gekennzeichnet, dass sie als Liganden oligomere Phosphonsäureester der Formel

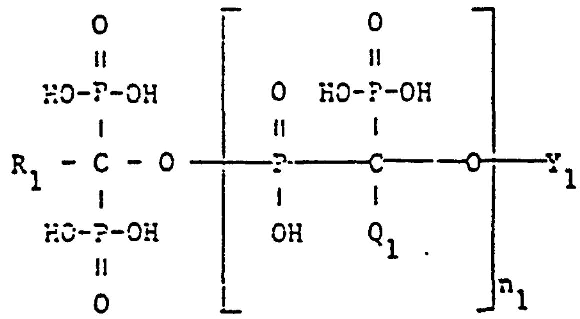

,

enthalten,
worin $Y_1$ Wasserstoff oder $-COT_1$ ist, $R_1$, $Q_1$ und $T_1$ jeweils Alkyl mit 1 bis 4 Kohlenstoffatomen sind und $n_1$ 1 bis 16 ist.

2. Magnesiumkomplexe nach Anspruch 1, dadurch gekennzeichnet, dass sie die Phosphonsäureester und Magnesium im Molverhältnis von 1:0,1 bis 1:4,5 enthalten, sofern das Molgewicht 394 für die Phosphonsäureester gewählt wird.

3. Magnesiumkomplexe nach Anspruch 2, dadurch gekennzeichnet, dass sie die Phosphonsäureester und Magnesium im Molverhältnis von 1:0,5 bis 1:3,0 enthalten.

4. Verfahren zur Herstellung der Magnesiumkomplexe nach Anspruch 1, dadurch gekennzeichnet, dass man eine Lösung der oligomeren Phosphonsäureester unter Rühren mit einem wasserlöslichen Magnesiumsalz umsetzt, wobei die erhaltene Lösung einen pH-Wert von 0 bis 1 aufweist.

5. Verfahren nach Anspruch 4, dadurch gekennzeichnet, dass man die Lösung der Oligomeren mit dem wasserlöslichen Magnesiumsalz im Molverhältnis 1:0,1 bis 1:4,5 umsetzt, sofern das Molgewicht 394 für die oligomeren Phosphonsäureester gewählt wird.

6. Verfahren nach Anspruch 5, dadurch gekennzeichnet, dass das wasserlösliche Magnesiumsalz Magnesiumchlorid ist.

7. Alkalische peroxidhaltige Bleichflotten, dadurch gekennzeichnet, dass sie einen Magnesiumkomplex nach Anspruch 1 enthalten.

8. Alkalische peroxidhaltige Bleichflotten nach Anspruch 7, dadurch gekennzeichnet, dass sie zusätzlich eine Polyhydroxyverbindung enthalten.

9. Alkalische peroxidhaltige Bleichflotten nach Anspruch 8, dadurch gekennzeichnet, dass die Polyhydroxyverbindung mindestens 2 Hydroxylgruppen enthält.

10. Alkalische peroxidhaltige Bleichflotten nach Anspruch 9, dadurch gekennzeichnet, dass die Polyhydroxyverbindung der Formel

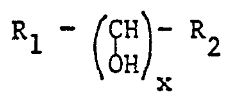

entspricht, worin $R_1$ und $R_2$ unabhängig voneinander $-CH_2OH$, $-CHO$ oder $-CO_2M$ sind, M Wasserstoff oder ein Alkalimetall und x 2 bis 5 ist.

11. Alkalische peroxidhaltige Bleichflotten nach Anspruch 10, dadurch gekennzeichnet, dass die Polyhydroxyverbindung eine Hydroxycarbonsäure der Formel

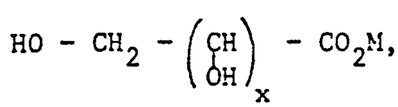

worin M und x die in Anspruch 10 angegebene Bedeutung haben, oder ein Lacton dieser Hydroxycarbonsäuren ist.

12. Alkalische peroxidhaltige Bleichflotten nach Anspruch 11, dadurch gekennzeichnet, dass die

Polyhydroxyverbindung Glucose, Gluconsäure, ein Alkalimetallsalz der Gluconsäure oder das γ-Lacton der Gluconsäure ist.

13. Alkalische peroxidhaltige Bleichflotten nach Anspruch 8, dadurch gekennzeichnet, dass sie Phosphonsäureester, Magnesium und Polyhydroxyverbindung im Molverhältnis von 1:(0,1-4,5):(0,1-20) enthalten, sofern das Molgewicht 394 für die Phosphonsäureester gewählt wird.

14. Alkalische peroxidhaltige Bleichflotten nach Anspruch 8, dadurch gekennzeichnet, dass sie
(a) ein Alkalimetallhydroxid,
(b) Wasserstoffperoxid,
(c) einen Magnesiumkomplex gemäss Anspruch 1,
(d) eine Polyhydroxyverbindung
und gegebenenfalls
(e) ein Peroxydisulfat,
(f) ein Netzmittel,
(g) ein Entschäumungs- und/oder Entlüftungsmittel,
(h) ein wasserlösliches Alkalisalz eines Silikates und/oder
(i) einen optischen Aufheller
enthalten.

15. Alkalische peroxidhaltige Bleichflotten nach Anspruch 14, dadurch gekennzeichnet, dass sie
(a) 0,02 bis 10 Gewichtsprozent Alkalimetallhydroxid,
(b) 0,01 bis 2,5 Gewichtsprozent Wasserstoffperoxid,
(c) 0,02 bis 4 Gewichtsprozent Magnesiumkomplex gemäss Anspruch 1,
(d) 0,04 bis 1 Gewichtsprozent Polyhydroxyverbindung
und gegebenenfalls
(e) 0 bis 5 Gewichtsprozent Peroxidisulfat,
(f) 0 bis 2,5 Gewichtsprozent Netzmittel,
(g) 0 bis 0,05 Gewichtsprozent Entschäumungs- und/oder Entlüftungsmittel,
(h) 0 bis 1,5 Gewichtsprozent wasserlösliches Alkalisilikat und/oder
(i) 0 bis 0,8 Gewichtsprozent optische Aufheller
enthalten, wobei sich die Prozentangaben auf den Gehalt an Aktivsubstanz der Komponenten (a) bis (i) beziehen.

16. Alkalische peroxidhaltige Bleichflotten nach Anspruch 15, dadurch gekennzeichnet, dass sie die Komponente (c) zu 0,05 bis 0,5 Gewichtsprozent und Komponente (d) zu 0,04 bis 0,5 Gewichtsprozent enthalten.

17. Alkalische peroxidhaltige Bleichflotten nach Anspruch 16, dadurch gekennzeichnet, dass sie die Komponente (c) zu 0,05 bis 0,3 Gewichtsprozent und Komponente (d) zu 0,04 bis 0,35 Gewichtsprozent enthalten.

18. Verwendung der Bleichflotten nach den Ansprüchen 7 bis 17 zum Bleichen cellulosehaltiger Fasermaterialien.

19. Verfahren zum Bleichen cellulosehaltiger Fasermaterialien, dadurch gekennzeichnet, dass man Bleichflotten nach den Ansprüchen 7 bis 17 verwendet.

20. Verfahren nach Anspruch 19, dadurch gekennzeichnet, dass die Bleichflotten eine Temperatur von 20 bis 140°C besitzen.

21. Verfahren zum Bleichen cellulosehaltiger Fasermaterialen, dadurch gekennzeichnet, dass man die Materialien mit einer Bleichflotte nach den Ansprüchen 7 bis 17 imprägniert und anschliessend bei 20 bis 140°C behandelt.

**Patentansprüche**

für den Vertragsstaat AT

1. Verfahren zur Herstellung von Magnesiumkomplexen, die als Liganden oligomere Phosphonsäureester der Formel

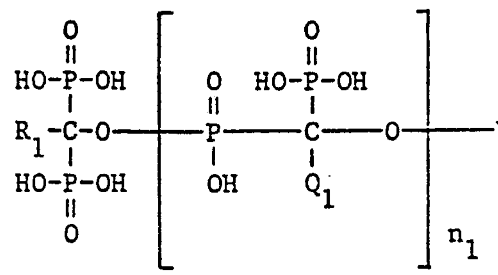

enthalten,

worin $Y_1$ Wasserstoff oder $-COT_1$ ist, $R_1$, $Q_1$ und $T_1$ jeweils Alkyl mit 1 bis 4 Kohlenstoffatomen sind und $n_1$ 1 bis 16 ist, dadurch gekennzeichnet, dass man eine wässrige Lösung der oligomeren Phosphonsäureester unter Rühren zu einer wässrigen Lösung eines Magnesiumsalzes zutropft, wobei der pH-Wert der so erhaltenen lösung zwischen 0 und 1 liegt.

2. Verfahren nach Anspruch 1, dadurch gekennzeichnet, dass man die Lösung der Oligomeren mit der Lösung des Magnesiumsalzes im Molverhältnis 1:0,1 bis 1:4,5 umsetzt, sofern das Molverhältnis 394 für die oligomeren Phosphonsäureester gewählt wird.

3. Verfahren nach Anspruch 2, dadurch gekennzeichnet, dass das wasserlösliche Magnesiumsalz Magnesiumchlorid ist.

4. Alkalische peroxidhaltige Bleichflotten, dadurch gekennzeichnet, dass sie einen Magnesiumkomplex hergestellt nach Anspruch 1 enthalten.

5. Alkalische peroxidhaltige Bleichflotten nach Anspruch 4, dadurch gekennzeichnet, dass sie zusätzlich eine Polyhydroxyverbindung enthalten.

6. Alkalische peroxidhaltige Bleichflotten nach Anspruch 5, dadurch gekennzeichnet, dass die Polyhydroxyverbindung mindestens 2 Hydroxylgruppen enthält.

7. Alkalische peroxidhaltige Bleichflotten nach Anspruch 6, dadurch gekennzeichnet, dass die Polyhydroxyverbindung der Formel

$$R_1 - \left(\begin{matrix}CH\\OH\end{matrix}\right)_x - R_2$$

entspricht, worin $R_1$ und $R_2$ unabhängig voneinander $-CH_2OH$, $-CHO$ oder $-CO_2M$ sind, M Wasserstoff oder ein Alkalimetall und x 2 bis 5 ist.

8. Alkalische peroxidhaltige Bleichflotten nach Anspruch 7, dadurch gekennzeichnet, dass die Polyhydroxyverbindung eine Hydroxycarbonsäure der Formel

$$HO - CH_2 - \left(\begin{matrix}CH\\OH\end{matrix}\right)_x - CO_2M,$$

worin M und x die in Anspruch 7 angegebene Bedeutung haben, oder ein Lacton dieser Hydroxycarbonsäuren ist.

9. Alkalische peroxidhaltige Bleichflotten nach Anspruch 8, dadurch gekennzeichnet, dass die Polyhydroxyverbindung Glucose, Gluconsäure, ein Alkalimetallsalz der Gluconsäure oder das γ-Lacton der Gluconsäure ist.

10. Alkalische peroxidhaltige Bleichflotten nach Anspruch 5, dadurch gekennzeichnet, dass sie Phosphonsäureester, Magnesium und Polyhydroxyverbindung im Molverhältnis von 1:(0,1-4,5):(0,1-20) enthalten, sofern das Molgewicht 394 für die Phosphonsäureester gewählt wird.

11. Alkalische peroxidhaltige Bleichflotten nach Anspruch 5, dadurch gekennzeichnet, dass sie

(a) ein Alkalimetallhydroxid,
(b) Wasserstoffperoxid,
(c) einen Magnesiumkomplex hergestellt gemäss Anspruch 1,
(d) eine Polyhydroxyverbindung
und gegebenenfalls
(e) ein Peroxydisulfat,
(f) ein Netzmittel,
(g) ein Entschäumungs- und/oder Entlüftungsmittel,
(h) ein wasserlösliches Alkalisalz eines Silikates und/oder
(i) einen optischen Aufheller

enthalten.

12. Alkalische peroxidhaltige Bleichflotten nach Anspruch 11, dadurch gekennzeichnet, dass sie
(a) 0,02 bis 10 Gewichtsprozent Alkalimetallhydroxid,
(b) 0,01 bis 2,5 Gewichtsprozent Wasserstoffperoxid,
(c) 0,02 bis 4 Gewichtsprozent Magnesiumkomplex hergestellt gemäss Anspruch 1,
(d) 0,04 bis 1 Gewichtsprozent Polyhydroxyverbindung
und gegebenenfalls
(e) 0 bis 5 Gewichtsprozent Peroxidisulfat,
(f) 0 bis 2,5 Gewichtsprozent Netzmittel,
(g) 0 bis 0,05 Gewichtsprozent Entschäumungs- und/oder Entlüftungsmittel,
(h) 0 bis 1,5 Gewichtsprozent wasserlösliches Alkalisilikat und/oder
(i) 0 bis 0,8 Gewichtsprozent optische Aufheller
enthalten, wobei sich die Prozentangaben auf den Gehalt an Aktivsubstanz der Komponenten (a) bis (i) beziehen.

13. Alkalische peroxidhaltige Bleichflotten nach Anspruch 12, dadurch gekennzeichnet, dass sie die Komponente (c) zu 0,05 bis 0,5 Gewichtsprozent und Komponente (d) zu 0,04 bis 0,5 Gewichtsprozent enthalten.

14. Alkalische peroxidhaltige Bleichflotten nach Anspruch 13, dadurch gekennzeichnet, dass sie die Komponente (c) zu 0,05 bis 0,3 Gewichtsprozent und Komponente (d) zu 0,04 bis 0,35 Gewichtsprozent enthalten.

15. Verwendung der Bleichflotten nach den Ansprüchen 4 bis 14 zum Bleichen cellulosehaltiger Fasermaterialien.

16. Verfahren zum Bleichen cellulosehaltiger Fasermaterialien, dadurch gekennzeichnet, dass man Bleichflotten nach den Ansprüchen 4 bis 14 verwendet.

17. Verfahren nach Anspruch 16, dadurch gekennzeichnet, dass die Bleichflotten eine Temperatur von 20 bis 140° C besitzen.

18. Verfahren zum Bleichen cellulosehaltiger Fasermaterialen, dadurch gekennzeichnet, dass man die Materialien mit einer Bleichflotte nach den Ansprüchen 4 bis 14 imprägniert und anschliessend bei 20 bis 140° C behandelt.

**Claims**

for the Contracting States: DE, GB, FR, CH, LI, IT, NL, BE

1. A magnesium complex which contains, as ligands, oligomeric phosphonic acid esters of the formula

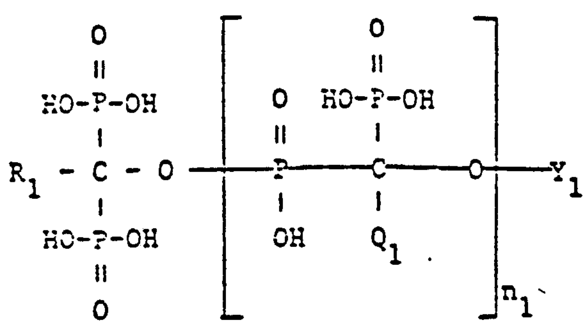

,

in which $Y_1$ is hydrogen or $-COT_1$,, $R_1$,, $Q_1$ and $T_1$ are each alkyl having 1 to 4 carbon atoms and $n_1$ is 1 to 16.

2. A magnesium complex according to claim 1, which contains the phosphonic acid esters and the magnesium in a molar ratio of 1:0.1 to 1:4.5, provided the molecular ratio 394 is selected for the phosphonic acid esters.

3. A magnesium complex according to claim 2, which contains the phosphonic acid esters and the magnesium in a molar ratio of 1:0.5 to 1:3.0.

4. A process for the preparation of a magnesium complex according to claim 1, which comprises reacting a solution of the oligomeric phosphonic acid esters with a water-soluble magnesium salt with stirring; the pH value of the resultant mixture being in the range from 0 to 1.

5. A process according to claim 4, which comprises reacting the solution of the oligomers with the water-soluble magnesium salt in a molar ratio of 1:0.1 to 1:4.5, provided the molecular ratio 394 is selected for the oligomeric phosphonic acid esters.

6. A process according to claim 5, wherein the water-soluble magnesium salt is magnesium chloride.

7. An alkaline, peroxide-containing bleach liquor containing a magnesium complex according to claim 1.

8. An alkaline, peroxide-containing bleach liquor according to claim 7, which additionally contains a

polyhydroxy compound.

9. An alkaline, peroxide-containing bleach liquor according to claim 8, wherein the polyhydroxy compound contains at least 2 hydroxyl groups.

10. An alkaline, peroxide-containing bleach liquor according to claim 9, wherein the polyhydroxy compound has the formula

$$R_1 - \left(\begin{matrix}CH\\ |\\ OH\end{matrix}\right)_x - R_2$$

in which $R_1$ and $R_2$ are each independently of the other $-CH_2OH$, $-CHO$ or $-CO_2M$, M is hydrogen or an alkali metal and x is 2 to 5.

11. An alkaline, peroxide-containing bleach liquor according to claim 10, wherein the polyhydroxy compound is a hydroxycarboxylic acid of the formula

$$HO - CH_2 - \left(\begin{matrix}CH\\ |\\ OH\end{matrix}\right)_x - CO_2M,$$

in which M and x are as defined in claim 10, or is a lactone of these hydroxycarboxylic acids.

12. An alkaline, peroxide-containing bleach liquor according to claim 11, wherein the polyhydroxy compound is glucose, gluconic acid, an alkali metal salt of gluconic acid or the $\gamma$-lactone of gluconic acid.

13. An alkaline, peroxide-containing bleach liquor according to claim 8, which contains the phosphonic acid esters, magnesium and the polyhydroxy compound in a molar ratio of 1:(0.1-4.5):(0.1-20), provided the molecular ratio 394 is selected for the phosphonic acid esters.

14. An alkaline, peroxide-containing bleach liquor according to claim 8, which contains
(a) an alkali metal hydroxide,
(b) hydrogen peroxide,
(c) a magnesium complex according to claim 1,
(d) a polyhydroxy compound and, optionally,
(e) a peroxydisulfate,
(f) a wetting agent,
(g) an anti-foaming and/or deaerating agent,
(h) a water-soluble alkali metal salt of a silicate and/or
(i) a fluorescent whitening agent.

15. An alkaline, peroxide-containing bleach liquor according to claim 14, which contains
(a) 0.02 to 10 per cent by weight of alkali metal hydroxide,
(b) 0.01 to 2.5 per cent by weight of hydrogen peroxide,
(c) 0.02 to 4 per cent by weight of a magnesium complex according to claim 1,
(d) 0.04 to 1 per cent by weight of polyhydroxy compound
and, optionally,
(e) 0 to 5 per cent by weight of peroxydisulfate,
(f) 0 to 2.5 per cent by weight of wetting agent,
(g) 0 to 0.05 per cent by weight of anti-foaming and/or deaerating agent,
(h) 0 to 1.5 per cent by weight of water-soluble alkali metal silicate and/or
(i) 0 to 0.8 per cent by weight of fluorescent whitening agent, the percentages being based on the content of active substance of components (a) to (i).

16. An alkaline, peroxide-containing bleach liquor according to claim 15, which contains 0.05 to 0.5 per cent by weight of the component (c) and 0.04 to 0.5 per cent by weight of component (d).

17. An alkaline, peroxide-containing bleach liquor according to claim 16, which contains 0.05 to 0.3 per cent by weight of the component (c) and 0.04 to 0.35 per cent by weight of the component (d).

18. The use of a bleach liquor according to any one of claims 7 to 17 for bleaching fibrous material made of or containing cellulose.

19. A process for bleaching fibrous material made of or containing cellulose, which comprises using a bleach liquor according to any one of claims 7 to 17.

20. A process according to claim 19, wherein the bleach liquor is at a temperature in the range from 20° to 140°C.

21. A process for bleaching fibrous material made of or containing cellulose, which comprises impregnating the materials with a bleach liquor according to any one of claims 7 to 17 and then treating the materials at a temperature in the range from 20° to 140°C.

**Claims**

for the Contracting State: AT

1. A process for the manufacture of a magnesium complex which contains, as ligands, oligomeric phosphonic acid esters of the formula

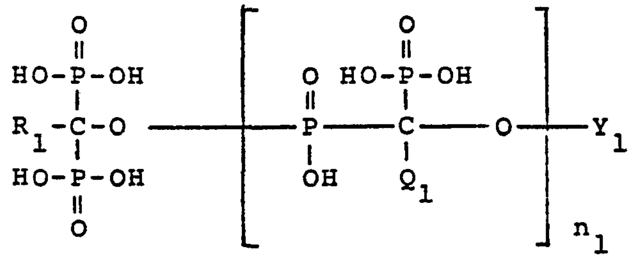

in which $Y_1$ is hydrogen or $-COT_1$, $R_1$, $Q_1$ and $T_1$ are each alkyl having 1 to 4 carbon atoms and $n_1$ is 1 to 16, which process comprises dropwise addition of an aqueous solution of the oligomeric phosphonic acid esters to an aqueous solution of a magnesium salt with stirring; the pH-value of the mixture obtained being in the range from 0 to 1.

2. A process according to claim 1, which comprises reacting the solution of the oligomers with the water-soluble magnesium salt in a molar ratio of 1:0 1 to 1:4.5, provided the molecular ratio 394 is selected for the oligomeric phosphonic acid esters.

3. A process according to claim 2, wherein the water-soluble magnesium salt is magnesium chloride.

4. An alkaline, peroxide-containing bleach liquor containing a magnesium complex prepared by the process according to claim 1.

5. An alkaline, peroxide-containing bleach liquor according to claim 4, which additionally contains a polyhydroxy compound.

6. An alkaline, peroxide-containing bleach liquor according to claim 5, wherein the polyhydroxy compound contains at least 2 hydroxyl groups.

7. An alkaline, peroxide-containing bleach liquor according to claim 6, wherein the polyhydroxy compound has the formula

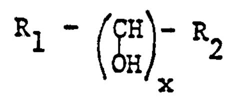

in which $R_1$ and $R_2$ are each independently of the other $-CH_2OH$, $-CHO$ or $-CO_2M$, M is hydrogen or an alkali metal and x is 2 to 5.

8. An alkaline, peroxide-containing bleach liquor according to claim 7, wherein the polyhydroxy compound is a hydroxycarboxylic acid of the formula

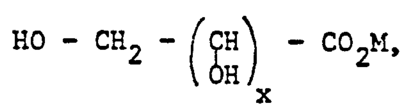

in which M and x are as defined in claim 7, or is a lactone of these hydroxycarboxylic acids.

9. An alkaline, peroxide-containing bleach liquor according to claim 8, wherein the polyhydroxy compound is glucose, gluconic acid, an alkali metal salt of gluconic acid or the γ-lactone of gluconic acid.

10. An alkaline, peroxide-containing bleach liquor according to claim 5, which contains the phosphonic acid esters, magnesium and the polyhydroxy compound in a molar ratio of 1:(0.1-4.5):(0.1-20), provided the molecular ratio 394 is selected for the phosphonic acid esters.

11. An alkaline, peroxide-containing bleach liquor according to claim 5, which contains
(a) an alkali metal hydroxide,
(b) hydrogen peroxide,
(c) a magnesium complex prepared by the process according to claim 1
(d) a polyhydroxy compound and, optionally,
(e) a peroxydisulfate,
(f) a wetting agent,

(g) an anti-foaming and/or deaerating agent,
(h) a water-soluble alkali metal salt of a silicate and/or
(i) a fluorescent whitening agent.

12. An alkaline, peroxide-containing bleach liquor according to claim 11, which contains
(a) 0.02 to 10 per cent by weight of alkali metal hydroxide,
(b) 0.01 to 2.5 per cent by weight of hydrogen peroxide,
(c) 0.02 to 4 per cent by weight of a magnesium complex prepared by the process according to claim 1
(d) 0.04 to 1 per cent by weight of polyhydroxy compound
and, optionally,
(e) 0 to 5 per cent by weight of peroxydisulfate,
(f) 0 to 2.5 per cent by weight of wetting agent,
(g) 0 to 0.05 per cent by weight of anti-foaming and/or deaerating agent,
(h) 0 to 1.5 per cent by weight of water-soluble alkali metal silicate and/or
(i) 0 to 0.8 per cent by weight of fluorescent whitening agent, the percentages being based on the content of active substance of components (a) to (i).

13. An alkaline, peroxide-containing bleach liquor according to claim 12, which contains 0.05 to 0.5 per cent by weight of the component (c) and 0.04 to 0.5 per cent by weight of component (d).

14. An alkaline, peroxide-containing bleach liquor according to claim 13, which contains 0.05 to 0.3 per cent by weight of the component (c) and 0.04 to 0.35 per cent by weight of the component (d).

15. The use of a bleach liquor according to any one of claims 4 to 14 for bleaching fibrous material made of or containing cellulose.

16. A process for bleaching fibrous material made of or containing cellulose, which comprises using a bleach liquor according to any one of claims 4 to 14.

17. A process according to claim 16, wherein the bleach liquor is at a temperature in the range from 20° to 140° C.

18. A process for bleaching fibrous material made of or containing cellulose, which comprises impregnating the materials with a bleach liquor according to any one of claims 4 to 14 and then treating the materials at a temperature in the range from 20° to 140° C.

**Revendications**

pour les Etats contractants: DE, GB, FR, CH, LI, IT, NL, BE.

1. Complexes de magnésium, caractérisés en ce qu'ils contiennent comme ligands des esters d'acides phosphoniques oligomères, de formule

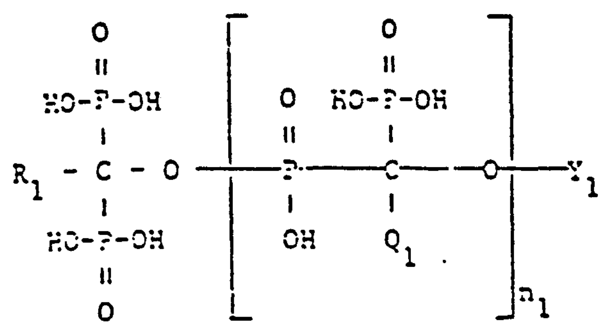

,

dans laquelle $Y_1$ est un hydrogène ou $-COT_1$, $R_1$, $Q_1$ et $T_1$ représentent chacun un radical alkyle ayant de 1 à 4 atomes de carbone, et $n_1$ vaut de 1 à 16.

2. Complexes de magnésium selon la revendication 1, caractérisés en ce qu'ils contiennent les esters d'acides phosphoniques et le magnésium selon un rapport, en moles, de 1:0,1 à 1:4,5, du moment que l'on choisit pour les esters d'acides phosphoniques la masse moléculaire 394.

3. Complexes de magnésium selon la revendication 2, caractérisés en ce qu'ils contiennent les esters d'acides phosphoniques et le magnésium selon un rapport, en moles, de 1:0,5 à 1:3,0.

4. Procédé de préparation des complexes de magnésium selon la revendication 1, caractérisé en ce qu'on fait réagir une solution des esters d'acides phosphoniques oligomères, sous agitation, sur un sel de magnésium soluble dans l'eau, la solution obtenue ayant un pH de 0 à 1.

5. Procédé selon la revendication 4, caractérisé en ce qu'on fait réagir la solution des oligomères sur le sel de magnésium soluble dans l'eau, selon un rapport en moles de 1:0,1 à 1:4,5, du moment que l'on choisit pour les

esters d'acides phosphoniques oligomères la masse moléculaire 394.

6. Procédé selon la revendication 5, caractérisé en ce que le sel de magnésium soluble dans l'eau est le chlorure de magnésium.

7. Bains de blanchiment alcalins, contenant des peroxydes, caractérisés en ce qu'ils contiennent un complexe de magnésium selon la revendication 1.

8. Bains de blanchiment alcalins, contenant des peroxydes, selon la revendication 7, caractérisés en ce qu'ils contiennent en outre un composé polyhydroxylé.

9. Bains de blanchiment alcalins, contenant des peroxydes, selon la revendication 8, caractérisés en ce que le composé polyhydroxylé contient au moins deux groupes hydroxyle.

10. Bains de blanchiment alcalins, contenant des peroxydes, selon la revendication 9, caractérisés en ce que le composé polyhydroxylé correspond à la formule

$$R_1 - \left(\begin{matrix} CH \\ | \\ OH \end{matrix}\right)_x - R_2$$

dans laquelle $R_1$ et $R_2$ indépendamment l'un de l'autre, sont chacun $-CH_2OH$, $-CHO$ ou $-CO_2M$, M est un hydrogène ou un métal alcalin, et x vaut de 2 à 5.

11. Bains de blanchiment alcalins, contenant des peroxydes, selon la revendication 10, caractérisés en ce que le composé polyhydroxylé est un acide hydroxycarboxylique de formule

$$HO - CH_2 - \left(\begin{matrix} CH \\ | \\ OH \end{matrix}\right)_x - CO_2M,$$

dans laquelle M et x ont les significations données dans la revendication 10, ou une lactone de ces acides hydroxycarboxyliques.

12. Bains de blanchiment alcalins, contenant des peroxydes, selon la revendication 11, caractérisés en ce que le composé polyhydroxylé est le glucose, l'acide gluconique, un sel de métal alcalin de l'acide gluconique, ou la γ-lactone de l'acide gluconique.

13. Bains de blanchiment alcalins, contenant des peroxydes, selon la revendication 8, caractérisés en ce qu'ils contiennent les esters d'acides phosphoniques, le magnésium et le composé polyhydroxylé selon une proportion en moles de 1:(0,1-4,5):(0,1-20), du moment que l'on choisit pour les esters d'acides phosphoniques la masse moléculaire 394.

14. Bains de blanchiment alcalins, contenant des peroxydes, selon la revendication 6, caractérisés en ce qu'ils contiennent
(a) un hydroxyde de métal alcalin,
(b) du peroxyde d'hydrogène,
(c) un complexe de magnésium selon la revendication 1,
(d) un composé polyhydroxylé,
et éventuellement
(e) un peroxydisulfate,
(f) un mouillant,
(g) un agent antimoussant et/ou de désaération,
(h) un sel silicate de métal alcalin soluble dans l'eau,
et/ou
(i) un azurant optique.

15. Bains de blanchiment alcalins, contenant des peroxydes, selon la revendication 14, caractérisés en ce qu'ils contiennent, les indications de pourcentages se rapportant à la concentration de la matière active dans les constituants (a) à (i)
(a) de 0,02 à 10 % en poids de l'hydroxyde d'un métal alcalin,
(b) de 0,01 à 2,5 % en poids de peroxyde d'hydrogène,
(c) de 0,02 à 4 % en poids du complexe de magnésium selon la revendication 1,
(d) de 0,04 à 1 % en poids d'un composé polyhydroxylé,
et éventuellement
(e) de 0 à 5 % en poids d'un peroxydisulfate,
(f) de 0 à 2,5 % en poids d'un mouillant,
(g) de 0 à 0,05 % en poids d'un agent antimoussant et/ou
d'un agent de désaération,
(h) de 0 à 1,5 % en poids d'un silicate de métal alcalin soluble dans l'eau, et/ou
(i) de 0 à 0,8 % en poids d'un azurant optique.

16. Bains de blanchiment alcalins, contenant des peroxydes, selon la revendication 15, caractérisés en ce qu'ils contiennent le constituant (c) à raison de 0,05 à 0,5 % en poids et le constituant (d) à raison de 0,04 à 0,5

% en poids.

17. Bains de blanchiment alcalins, contenant des peroxydes, selon la revendication 16, caractérisés en ce qu'ils contiennent le constituant (c) à raison de 0,05 à 0,3 % en poids et le constituant (d) à raison de 0,04 à 0,35 % en poids.

18. Utilisation des bains de blanchiment selon les revendications 7 à 17 pour le blanchiment de matières fibreuses contenant de la cellulose.

19. Procédé pour le blanchiment de matières fibreuses contenant de la cellulose, caractérisé en ce qu'on utilise des bains de blanchiment selon les revendications 7 à 17.

20. Procédé selon la revendication 19, caractérisé en ce que les bains de blanchiment ont une température de 20 à 140° C.

21. Procédé pour le blanchiment de matières fibreuses contenant de la cellulose, caractérisé en ce qu'on imprègne les matières avec un bain de blanchiment selon les revendications 7 à 17, puis qu'on les traite entre 20 et 140° C.

**Revendications**

pour l'Etat Contractant: AT

1. Procédé de préparation de complexes de magnésium, qui contiennent comme ligands des esters d'acides phosphoniques oligomères de formule

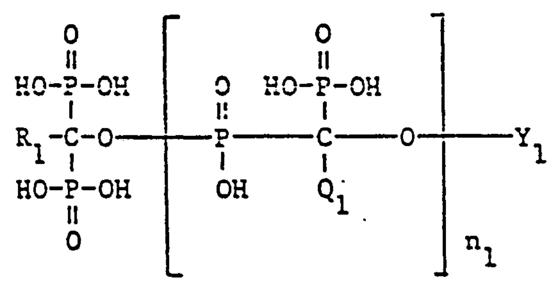

dans laquelle $Y_1$ est un hydrogène ou $-COT_1$, $R_1$, $Q_1$ et $T_1$ représentent chacun un radical alkyle ayant de 1 à 4 atomes de carbone, et $n_1$ vaut 1 à 16, caractérisé en ce qu'on ajoute goutte à goutte, sous agitation, une solution aqueuse des esters d'acides phosphoniques oligomères à une solution aqueuse d'un sel de magnésium, le pH de la solution ainsi obtenue étant compris entre 0 et 1.

2. Procédé selon la revendication 1, caractérisé en ce qu'on fait réagir la solution de l'oligomère sur la solution du sel de magnésium, selon un rapport en moles de 1:0,1 à 1:4,5, du moment que l'on choisit pour les esters d'acides phosphoniques oligomères la masse moléculaire 394.

3. Procédé selon la revendication 2, caractérisé en ce que le sel de magnésium soluble dans l'eau est le chlorure de magnésium.

4. Bains de blanchiment alcalins, contenant des peroxydes, caractérisés en ce qu'ils contiennent un complexe de magnésium préparé selon la revendication 1.

5. Bains de blanchiment alcalins, contenant des peroxydes, selon la revendication 4, caractérisés en ce qu'ils contiennent en outre un composé polyhydroxylé.

6. Bains de blanchiment alcalins, contenant des peroxydes, selon la revendication 5, caractérisés en ce que le composé polyhydroxylé contient au moins deux groupes hydroxyle.

7. Bains de blanchiment alcalins, contenant des peroxydes, selon la revendication 6, caractérisés en ce que le composé polyhydroxylé correspond à la formule

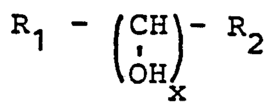

dans laquelle $R_1$ et $R_2$, indépendamment l'un de l'autre, sont chacun $-CH_2OH$, $-CHO$ ou $-CO_2M$, M est un hydrogène ou un métal alcalin, et x vaut de 2 à 5.

8. Bains de blanchiment alcalins, contenant des peroxydes, selon la revendication 7, caractérisés en ce que le composé polyhydroxylé est un acide hydroxycarboxylique de formule

$$HO - CH_2 - \left(\begin{matrix} CH \\ | \\ OH \end{matrix}\right)_x - CO_2M$$

dans laquelle M et x ont les significations données dans la revendication 7, ou bien une lactone de ces acides hydroxycarboxyliques.

9. Bains de blanchiment alcalins, contenant des peroxydes, selon la revendication 8, caractérisés en ce que le composé polyhydroxylé est le glucose, l'acide gluconique, un sel de métal alcalin de l'acide gluconique, ou la γ-lactone de l'acide gluconique.

10. Bains de blanchiment alcalins, contenant des peroxydes, selon la revendication 5, caractérisés en ce qu'ils contiennent les esters d'acides phosphoniques, le magnésium et le composé polyhydroxylé selon une proportion en moles de 1:(0,1-4,5):(0,1-20), du moment que l'on choisit pour les esters d'acides phosphoniques la masse moléculaire 394.

11. Bains de blanchiment alcalins, contenant des peroxydes, selon la revendication 5, caractérisés en ce qu'ils contiennent

(a) un hydroxyde d'un métal alcalin,
(b) du peroxyde d'hydrogène,
(c) un complexe de magnésium préparé selon la revendication 1,
(d) un composé polyhydroxylé,
et éventuellement
(e) un peroxydisulfate,
(f) un mouillant,
(g) un agent antimoussant et/ou un agent de désaération,
(h) un silicate de métal alcalin soluble dans l'eau,
et/ou
(i) un azurant optique.

12. Bains de blanchiment alcalins, contenant des peroxydes, selon la revendication 11, caractérisés en ce qu'ils contiennent, les indications de pourcentage se rapportant à la concentration de la matière active dans les constituants (a) à (i),

(a) de 0,02 à 10 % en poids d'un hydroxyde de métal alcalin,
(b) de 0,01 à 2,5 % en poids de peroxyde d'hydrogéne,
(c) de 0,02 à 4 % en poids du complexe de magnésium préparé selon la revendication 1,
(d) de 0,04 à 1 % en poids d'un composé polyhydroxylé,
et éventuellement
(e) de 0 à 5 % en poids d'un peroxydisulfate,
(f) de 0 à 2,5 % en poids d'un mouillant,
(g) de 0 à 0,05 % en poids d'un agent antimoussant et/ ou d'un agent de désaération,
(h) de 0 à 1,5 % en poids d'un silicate de métal alcalin soluble dans l'eau, et/ou
(i) de 0 à 0,8 % en poids d'un azurant optique.

13. Bains de blanchiment alcalins, contenant des peroxydes, selon la revendication 12, caractérisés en ce qu'ils contiennent le constituant (c) à raison de 0,05 à 0,5 % en poids et le constituant (d) à raison de 0,04 à 0,5 % en poids.

14. Bains de blanchiment alcalins, contenant des peroxydes, selon la revendication 13, caractérisés en ce qu'ils contiennent le constituant (c) à raison de 0,05 à 0,3 % en poids et le constituant (d) à raison de 0,04 à 0,35 % en poids.

15. Utilisation des bains de blanchiment selon les revendications 4 à 14 pour le blanchiment de matières fibreuses contenant de la cellulose.

16. Procédé pour le blanchiment de matières fibreuses contenant de la cellulose, caractérisé en ce qu'on utilise des bains de blanchiment selon les revendications 4 à 14.

17. Procédé selon la revendication 16, caractérisé en ce que les bains de blanchiment ont une température de 20 à 140°C.

18. Procédé pour le blanchiment de matières fibreuses contenant de la cellulose, caractérisé en ce qu'on imprègne les matières avec un bain de blanchiment selon les revendications 4 à 14, puis qu'on les traite entre 20 et 140°C.